Europäisches Patentamt

European Patent Office

Office européen des brevets

(11) Veröffentlichungsnummer: **0 307 761 B1**

# (12) EUROPÄISCHE PATENTSCHRIFT

(45) Veröffentlichungstag der Patentschrift: **11.11.92**

(21) Anmeldenummer: **88114488.5**

(22) Anmeldetag: **05.09.88**

(51) Int. Cl.⁵: **G03B 42/04**, G01T 1/29

---

(54) Verfahren zur Handhabung von Röntgenaufnahmekassetten mit einer phosphorbeschichteten Folie und zur Durchführung des Verfahrens geeignete Lesestation.

---

(30) Priorität: **17.09.87 DE 3731203**

(43) Veröffentlichungstag der Anmeldung:
**22.03.89 Patentblatt 89/12**

(45) Bekanntmachung des Hinweises auf die Patenterteilung:
**11.11.92 Patentblatt 92/46**

(84) Benannte Vertragsstaaten:
**BE DE FR GB IT**

(56) Entgegenhaltungen:
**EP-A- 0 077 999**
**EP-A- 0 079 557**
**EP-A- 0 125 412**
**EP-A- 0 219 836**
**EP-A- 0 231 926**

**PATENT ABSTRACTS OF JAPAN, Band 12, Nr. 25 (P-659)(2872), 26 Januar 1988 & JP A 62178945**

**PATENT ABSTRACTS OF JAPAN, Band 9, Nr. 141 (P-364)(1864), 15 Juni 1985 & JP A 6021043**

(73) Patentinhaber: **Agfa-Gevaert AG**

**W-5090 Leverkusen 1(DE)**

(72) Erfinder: **Bauer, Walter**
**Heinrich-Wieland-Strasse 178**
**W-8000 München 83(DE)**
Erfinder: **Müller, Jürgen, Dipl.-Ing.**
**Bozzarisstrasse 7**
**W-8000 München 90(DE)**
Erfinder: **Voigtländer, Volkmar, Dipl.-Phys.**
**Goethestrasse 3**
**W-8031 Eichenau(DE)**

---

EP 0 307 761 B1

## Beschreibung

Die Erfindung betrifft ein Verfahren zur Handhabung einer aus zwei gegeneinander schwenkbaren Teilen (Deckelteil und Bodenteil) bestehenden Röntgenaufnahmekassette, in der eine mit einer stimulierbaren Phosphorschicht beschichtete Röntgenaufnahmefolie mit ihrer Schichtseite zum Bodenteil gewendet angeordnet ist, wobei ein bei der Belichtung der Folie mit Röntgenstrahlen entstandenes latentes Bild in einer Lesestation nach dem Entnehmen der Folie aus der Kassette mittels eines Laserstrahlscanners zum Leuchten gebracht und das hierbei ausgesandte Licht in digitale elektrische Bildsignale umgewandelt und anschließend die Folie durch Beleuchtung mit geeignetem sichtbaren Licht gelöscht werden und die digitalen Bildsignale in einem Zentralspeicher abgespeichert werden und an einem Bildschirm in ein sichtbares Bild umwandelbar und/oder das Bildschirmbild in einem Bildschirmaufnahmegerät oder die digitalen Bildsignale in einem vom Zentralspeicher gesteuerten Laserstrahlaufnahmegerät (beides Hardcopy-Geräte genannt) auf fotografischen Blattfilm aufnehmbar sind sowie eine zur Durchführung des Verfahrens geeignete Lesestation.

Eine Kassette der eingangs genannten Art ist bekannt durch die EP 0079557 B1, ein Verfahren zur Verwendung einer derartigen Kassette ist außerdem bekannt durch die EP 0142709 A2 sowie durch auf dem Markt befindliche Gerate. Eine Vorrichtung zur Durchführung des eingangs genannten Verfahrens ist aus der EP-0 231 926 A2 bekannt.

Derartige bekannte Verfahren und Vorrichtungen für derartige Kassetten mit einer phosphorbeschichteten Aufnahmefolie beruhen im wesentlichen darauf, daß bei der Belichtung der in der Kassette befindlichen Folie mit Röntgenstrahlen ein latentes Bild entsteht. In einer Lesestation wird nach dem Entnehmen der Folie aus der Kassette mittels eines Laserstrahlscanners das latente Bild zum Leuchten gebracht (der Phosphor stimuliert) und das hierbei ausgesandte Licht in digitale elektrische Bildsignale umgesetzt, die auf einem Bildschirm oder einem Bildschirmaufnahmegerät oder einem computergesteuerten Laserstrahlaufnahmegerät wieder zu einem sichtbaren Bild umgewandelt werden können. Dann wird das latente bzw. leuchtende Bild gelöscht und die Folie einem Kassettenbeladegerät zugeführt. Die Identifizierungsdaten auf den Identifizierungsmitteln der Folie müssen dabei, soll ihr Sinn erreicht werden, mit einem hierfür geeigneten gesonderten Lesegerät ausgelesen und in digitale elektrische Identifizierungssignale umgesetzt und den digitalen Bildsignalen zugeführt werden.

Ein Nachteil des bekannten Verfahrens und der bekannten Vorrichtung ist darin zu sehen, daß die Folie zwischen dem Entnehmen aus der Kassette in der Lesestation und dem Wiedereinführen in die Kassette in einem Kassettenbeladegerät, gegen mechanische Einflüsse ungeschützt, ziemliche Wege zurücklegen muß, wodurch eine vorzeitige Abnutzung der Phosphorschicht bedingt sein kann.

Der Erfindung liegt die Aufgabe zugrunde, ein schonenderes und schnelleres Verfahren für die Behandlung der Folien zu ermöglichen und eine entsprechende Lesestation zu schaffen.

Diese Aufgabe wird erfindungsgemäß gelöst durch das Verfahren nach dem Hauptanspruch, insbesondere in Verbindung mit dem Vorrichtungsanspruch 3. Weitere vorteilhafte Merkmale der Erfindung sind den Unteransprüchen entnehmbar.

Das erfindungsgemäße Verfahren bzw. die hierzu geeignete, erfindungsgemäße Lesestation haben folgende Vorteile:

1. Der Benutzer hat mit der Folie nichts zu tun. Er bekommt sie nie zu Gesicht, außer bei nach sehr langer Benutzung erforderlichem Folienwechsel.

2. Es entfällt ein gesonderter Kassetten-Beladevorgang samt Kassetten-Beladegerät.

3. Es kann immer davon ausgegangen werden, daß eine Kassette gefüllt ist.

4. Die Kassette kann vollkommen geschlossen ausgelegt und es muß kein Fenster zum Lesen der Daten vorgesehen werden.

5. Über ihre gesamte Lebenszeit kann die Folie und die Kassette von einem veränderbaren Datensatz begleitet werden. Dies bietet die Möglichkeit, das Alter von Kassette und Folie, die Zahl von Belichtungen sowie den Zustand "belichtet/gelöscht" zu erkennen. Die Veranlassung der Fortzählung um "eins" im Kassettenspeicher bei jeder Digitalisierung eines latenten Bildes kann in der Lesestation durch eine Leseeinrichtung für den Kassettenspeicher erfolgen, das auf "Null" Zurücksetzen bei einem Folienwechsel in einer Identifikationsstation. Zur Einspeicherung der Folienzustandes "belichtet/gelöscht" im Kassettenspeicher müßte noch eine Dateneingabevorrichtung im Röntgengerät und eine entsprechende Löschstelle an der Leseeinrichtung vorgesehen sein. Bei Erreichen einer an die Lebensdauer einer Folie reichenden Aufnahmenanzahl kann in der Lesestation oder der Identifikationsstation ein Warnsignal ausgelöst werden.

6. Patientendaten können vor bzw. bei der Röntgenuntersuchung auf die Kassette geschrieben werden und begleiten ab da die von der Phosphorfolie registrierten Bildinformationen.

7. Durch die Zurückführung einer Folie in immer dieselbe Kassette in der Lesestation muß die Folie nur äußerst kurze Wege außerhalb der Kassette zurücklegen, wodurch sie gegen Beschädigungen beim Transport bzw. gegen Abnutzung besser geschützt ist als bei bekannten Bearbeitungsverfahren für Kassetten mit phosphorbeschichteten Folie. Dieses Verfahren ist daher auch dann mit Vorteil anwendbar, wenn die Patientendaten nicht auf einem Speicher auf der Kassette gespeichert werden, sondern auf andere Weise den digitalisierten Bildsignalen beigefügt werden, z.B. über einen lesbaren Speicher auf der Folie oder durch direkt den Bildsignalen über eine Tastatur an der Lesestation zugefügte Datensignale.

Die Erfindung wird anhand von Zeichnungen näher erläutert, wobei auch die Vorteile der erfindungsgemäßen Lösung eingehend erörtert werden.

Es zeigen

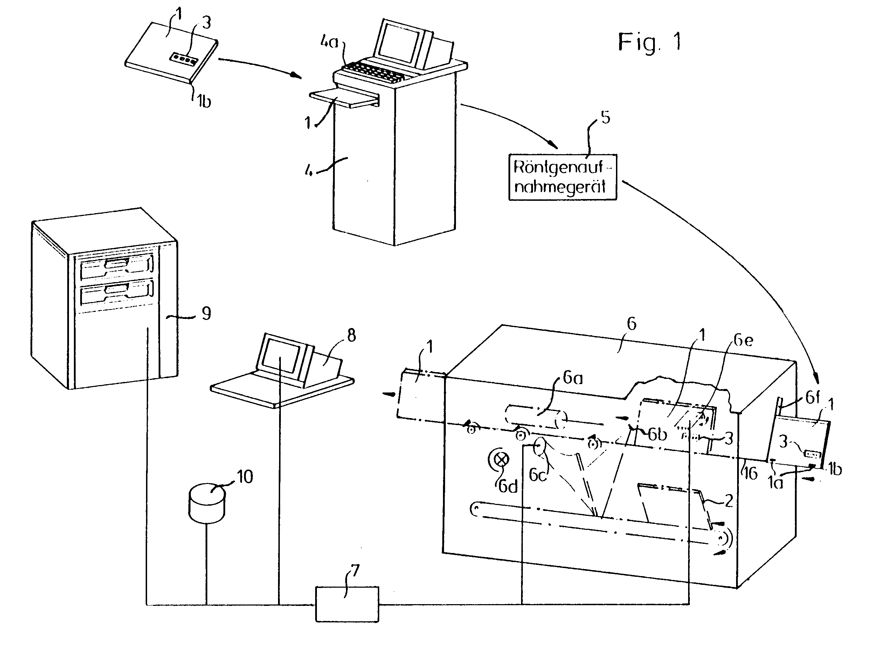

Fig. 1 eine Gerätekombination zur Erläuterung des erfindungsgemäßen Verfahrens,

Fig. 2 eine perspektivische, vereinfachte Darstellung einer erfindungsgemäßen Lesestation zur Durchführung des erfindungsgemäßen Verfahrens,

Fig. 3 eine Draufsicht auf dem Kassettentransport dienende Teile der Lesestation nach Figur 2,

Fig. 4 eine perspektivische Darstellung der dem Kassettentransport und der Kassettenent- und -wiederbeladung dienenden Teile der Lesestation nach Figur 2,

Fig. 5 eine perspektivische, vergrößerte Darstellung von Teilen der Figur 4 vor der Kassettenent- bzw. nach der Kassettenwiederbeladung,

Fig. 6 eine perspektivische, vergrößerte Darstellung von Teilen der Figur 4 in der positionierten Kassettenstellung vor der Kassettenentladung.

Die Erfindung geht aus von herkömmlichen Röntgenaufnahmekassetten für plane, röntgenstrahlenempfindliche Aufnahmematerialien. Diese Kassetten bestehen aus zwei gegeneinander schwenkbaren Gehäuseteilen, nämlich einem Boden- und einem Deckelteil, wobei gewöhnlich das Bodenteil dem Patienten bzw. den Röntgenstrahlen zugewandt ist. In den Kassetten befinden sich Andruckmittel für das Aufnahmematerial, z.B. eine Schaumstoffplatte. Diese Kassetten sind daher in den Figuren nur schematisch dargestellt und mit 1 beziffert. Diese Kassetten 1 einer jeweils im wesentlichen einheitlichen Bauart mit Mitteln 1a zum Ver- und Entriegeln des Deckelteiles sind in verschiedenen Größen für die vorkommenden Aufnahmeformate vorhanden. Im besonderen soll sich in den Kassetten 1 kein fotografischer Röntgenfilm befinden, sondern eine Aufnahmefolie 2, die mit einer Schicht von stimulierbarem Phosphor beschichtet ist. Auf dieser entsteht bei Belichtung mit Röntgenstrahlen ein latentes Bild, das durch Abtasten mit einem Laserstrahl zum Leuchten gebracht und in digitale elektrische Bildsignale umgewandelt und abgespeichert wird. Die gespeicherten Bildsignale können dann an einem Bildschirm als sichtbares Bild betrachtet werden. Dementsprechend kann eine sog. Hardcopy auf gewöhnlichem fotografischem Film durch bekannte Verfahren hergestellt werden.

An der Deckelaußenfläche einer jeden Kassette 1 in einer bestimmten Lage zu einem Bezugspunkt, die bei allen gleichartigen Kassetten unterschiedlicher Formate gleich ist, ist ein Daten in digitaler Form speichernder, beschreib-, les- und löschbarer Speicher 3 befestigt, der nachfolgend der Einfachheit halber und zur Unterscheidung von anderen Speichern als Kassettenspeicher bezeichnet wird. Von dem Kassettenspeicher 3 sind nur die Lagerplatine und die Anschlußkontakte 3a bis 3d sichtbar. Als Bezugspunkt für die Lage des Kassettenspeichers 3 kann eine bestimmte Kassettenecke 1b dienen, die in den Bearbeitungsgeräten für die Kassetten 1 bei Kassetten aller Formate an derselben Stelle im jeweiligen Gerät positioniert wird.

Als Speicher kommen entweder Magnetspeicher (Magnetstreifen) oder Halbleiterspeicher in Frage. Magnetspeicher haben der Vorteil, daß sie einfach und preisgünstig sind, aber auch den Nachteil, daß nur geringe Datenmengen speicherbar sind und der Auslesevorgang relativ lange dauert. Deshalb werden im nachfolgenden Halbleiterspeicher als die insgesamt vorteilhaftere Lösung vorausgesetzt. Deren Vorteile bestehen in der schnellen Lesbarkeit, hohen Speicherkapazität, Unempfindlichkeit gegen Magnetfelder und einer geringeren erforderlichen Auslesemechanik. Die Verbindung zwischen Datenspeicher und Ausleseelektronik kann galvanisch oder drahtlos erfolgen. Im Falle der Verwendung eines galvanischen Kontaktes dürfte ein serieller Speicher wegen der geringen Zahl der Anschlüsse vorzuziehen sein.

Die Benutzung der Kassette 1 der beschriebenen Art mit einer phosphorbeschichteten Folie 2 und einem auf einer Kassettenflachseite fest angeordneten, beschreib-, les- und zumindest teilweise löschbaren Speicher 3 soll nun nach einem besonderen, folienschonenden, Arbeitsgänge sparenden Handhabungsverfahren erfolgen. Dabei wird zunächst das bekannte Grundkonzept der Behandlung phosphorbeschichteter Folien 2 erläutert, wobei das bei der Belichtung der Folie 2 mit Röntgenstrahlen in einem Röntgengerät 5 entstandene latente Bild in einer Lesestation 6 nach dem Entnehmen der Folie 2 aus der Kassette 1 mittels eines Laserstrahlscanners 6a über einen Drehspiegel 6b vorzugsweise bei Weiterbewegung der Folie 2 zum Leuchten erregt wird, das hierbei ausgesandte Licht über eine Faseroptik und einen Fotomultiplier 6c in digitale elektrische Bildsignale umgesetzt und anschließend das Bild auf der Folie 2 durch Belichtung mit sichtbarem Licht mittels einer Lampe 6d gelöscht wird. Die digitalen Bildsignale werden in einem Zentralspeicher 7 gespeichert und können von hier aus auf einem Bildschirm 8 wieder in ein sichtbares Bild umgewandelt werden bzw. in einem Bildschirmaufnahmegerät oder einem Laserstrahlaufnahmegerät 9 (beide Geräte sind als Hardcopy-Geräte bekannt) auf fotografisches Blattmaterial in Form eines sichtbaren Bildes aufgenommen werden. Sie können aber auch auf Disketten 10 oder dergl. zur Ablage abgespeichert werden.

Ein neues Verfahrensgrundkonzept speziell für die Handhabung einer erfindungsgemäßen Kassette 1, 2, 3 ist dann so ausgestaltet worden, daß in einer mit einer Bedienungstastatur 4a versehenen Identifikationsstation 4 die für eine spezielle Röntgenaufnahme maßgebenden bildspezifischen Daten (z.B. Patientendaten) in den Kassettenspeicher 3 eingespeichert werden, und zwar entweder unmittelbar vor oder nach der Röntgenaufnahme im Röntgengerät 5, daß in der Lesestation 6 die im Kassettenspeicher 3 gespeicherten bildspezifischen Daten gelesen und zusammen mit den digitalen Bildsignalen der in der Kassette 1 mit Röntgenstrahlen belichteten Folie 2 im Zentralspeicher 7 abgespeichert werden und zusammen mit dem zugehörigen sichtbaren Bild sichtbar bzw. im Hardcopy-Gerät 9 fotografiert werden. Das Löschen der bildspezifischen Daten im Kassettenspeicher 3 nach deren Auswertung in der Lesestation 6 kann entweder an der Leseeinrichtung 6e für den Kassettenspeicher 3 in der Lesestation 6 oder beim Neubeschreiben des Kassettenspeichers 3 in der Identifikationsstation 4 erfolgen. Diese Verfahrensvariante hängt von der Geräteausgestaltung ab.

Zur Bearbeitung bzw. Handhabung von Kassetten 1, 2, 3 wird eine belichtete und mit eingespeicherten bildspezifischen Daten versehene Kassette 1 in die Lesestation 6 in Pfeilrichtung in einen Eingabeschlitz 6f eingegeben und dort positioniert, worauf dann die bildspezifischen Daten aus dem Kassettenspeicher 3 mittels der Leseeinrichtung 6e gelesen, anschließend die Kassette 1 geöffnet und die Folie 2 der Kassette 1 entnommen werden und schließlich die Folie 2 nach der schon beschriebenen Umsetzung des auf ihr enthaltenen latenten Bildes in die digitalen Bildsignale und deren Einspeicherung in den Zentralspeicher 7 sowie anschließendem Löschen des Bildes auf der Folie 2 wieder in dieselbe Kassette 1, aus der sie entnommen worden ist, zurücktransportiert wird. Dann wird die wiederbeladene Kassette aus einem Ausgabeschlitz 6g wieder gebrauchsfertig ausgegeben.

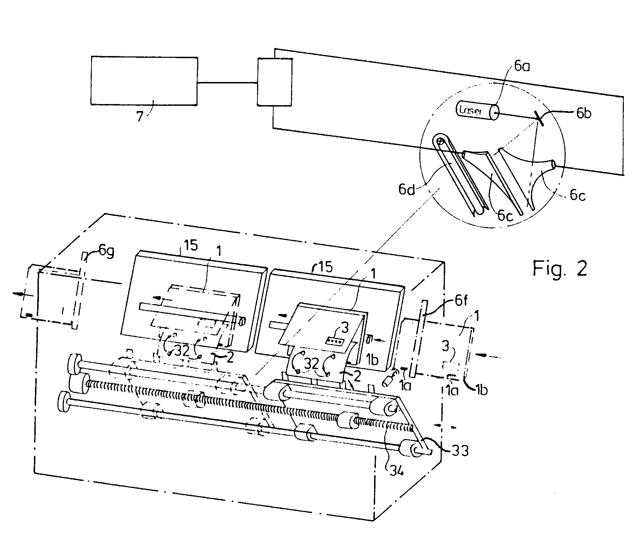

Das Besondere an diesem Verfahren besteht nun, wie den Figuren 2 bis 4 entnehmbar ist, darin, daß die in die Lesestation 6 eingegebene Kassette 1 im wesentlichen geradlinig durch die Lesestation 6 transportiert wird. An einer ersten Stelle wird sie jedoch angehalten und so weit abgesenkt, daß sie von einer an sich bekannten Positionier- und Entladevorrichtung erfaßt, geöffnet und entladen und geschlossen wird. Danach wird sie wieder auf ihre Transportbahn gehoben und in eine zweite Stellung befördert, in der sie wieder in eine der ersten gleichartige Positionier- und Beladevorrichtung übergeben wird. In dieser zweiten Positionier- und Beladevorrichtung wird sie wieder positioniert, geöffnet und mit der inzwischen bearbeiteten Folie 2 erneut beladen, geschlossen und aus dem Ausführschlitz 6g gebrauchsfähig wieder ausgegeben. Die der Kassette 1 in der ersten Positionier- und Entladevorrichtung entnommene Folie 2 wird auf bekannte Weise in eine ebenfalls bekannte Planfilmbühne eingeführt und in dieser geradlinig und parallel zur Kassette 1 durch ihre Behandlungsstationen bewegt und dann in der zweiten Positionier-und Beladevorrichtung wieder in die Kassette zurückgeführt. Die Folie 2 legt also außerhalb der Kassette nur ein zur Kassettenbewegung parallel verlaufendes, sehr kurzes Wegstück zurück, wobei eine getrennte Übergabe von Kassette und Folie in ein Beladegerät entfallen, also die Folie vor Abnutzung geschont und eine gesonderte Beladezeit sowie ein besonderes Beladegerät selbst eingespart werden.

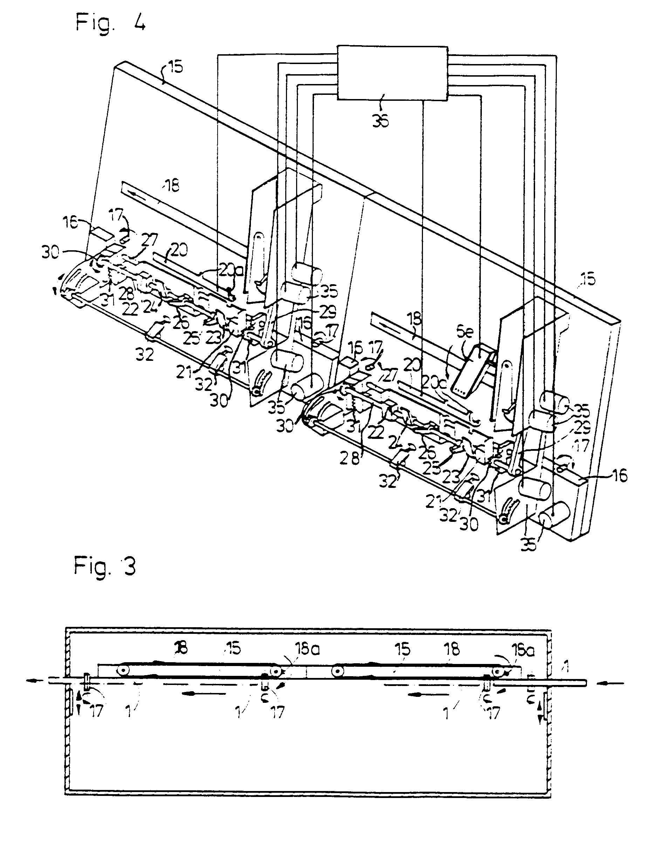

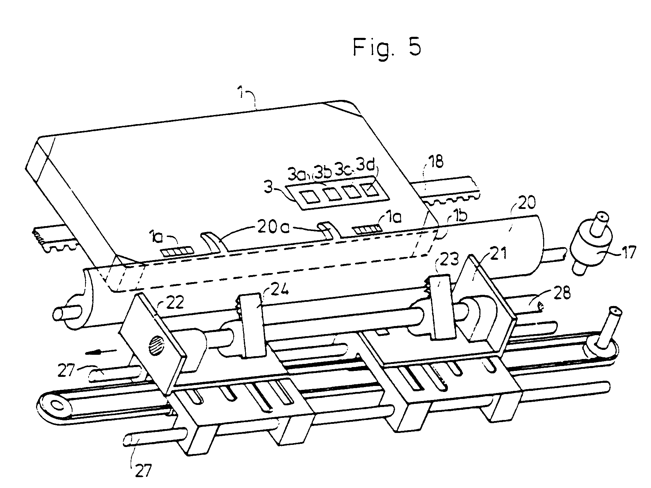

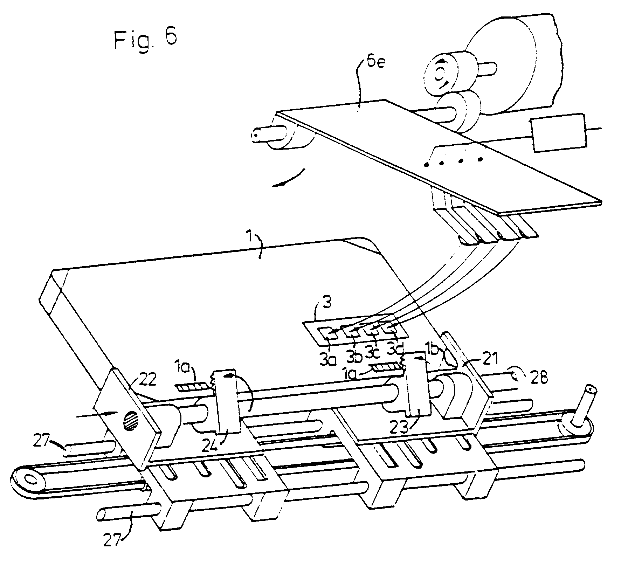

Das Positionieren der Kassetten zum Auslesen des Kassettenspeichers 3 und zur Entnahme der belichteten Folie sowie das Zurückführen derselben in die Kassette in der Lesestation 6 gemäß den Figuren 2 bis 4 kann durch jede hierfür von Kassettenent- und Beladegeräten her bekannte Vorrichtung erfolgen, z.B. durch die Ent- und Beladevorrichtung nach der DE 35 44 719 C1. Daher werden zunächst die beiden gleichen Vorrichtungen zum Kassettenpositionieren und Ent- bzw. Beladen anhand der Figur 4 nur kurz und schematisch beschrieben. Dabei liegt seitlich hinter dem Kassetteneinführschlitz 6f bzw. Ausgabeschlitz 6g der Lesestation 6 je eine Lager- und Führungsplatte 15. Mit der unteren Begrenzung des vertikalen Einführschlitzes 6f bzw. Ausführschlitzes 6g fluchtet je eine Führungs- und Auflagebahn 16 für die Kassetten mit wenigstens einer antreibbaren Reibrolle 17. Ist eine Kassette 1 in den Einführschlitz 6f eingegeben und bis zur Reibrolle 17 geschoben worden, so wird sie von dieser erfaßt und bis zu einem Transportband 18 mit Mitnehmern 18a, von denen nur einer sichtbar ist, geschoben. Nun befördert das Transportband 18 die Kassette bis zur Positioniervorrichtung. Erreicht dabei die vordere Kassettenkante eine nicht gezeigte Lichtschranke oder dergl., so wird der Kassettentransport gestoppt. Später zu beschreibende schwenkbare Führungskufen 20 übergeben sie in den Bereich der Positionierungsmittel. Diese bestehen je aus einem festen Anschlagwinkel 21 und einem mit diesem fluchtenden, verschiebbaren Anschlagwinkel 22. Zwischen beiden sind dreh- und verschiebbare Riegel 23, 24 zum Entriegeln des Kassettendeckels und drehbare Hebel 25, 26 zum wieder Schließen des Kassettendeckels angeordnet. Der Anschlagwinkel 22 samt dem ihm zugeordneten Riegel 24 und Hebel 26 ist auf einer Stange 27 verschiebbar und zusammen mit Riegel 23 und Hebel 24 auf einer Welle 28 gelagert, die über einen fest damit verbundenen Kurbeltrieb 29 drehbar und über fest mit ihr verbundene Zahnräder 30, die mit Zahnstangenstücken 31 kämmen, aufwärts und abwärts verschiebbar ist. Beim Eingeben einer Kassette nimmt die Welle 28 ihre obere Stellung ein, in der die durch sie nicht verdrehbaren Winkelstücke 21, 22 etwa in oder unter der Ebene der Bahn 16 bzw. Führungskufe 20 liegen. Die Kassette wird also durch die Führungskufe 20 von der Ebene der Bahn 16 in den Bereich der Winkelstücke 21, 22 geschoben. Dann wird das bewegliche Winkelstück 22 gegen das feste Winkelstück 21 geschoben, so daß die Kassette zwischen beiden Winkelstücken 21, 22 positioniert wird. Nun wird die schwenkbar vor dem Kassettendeckel liegende Leseeinrichtung 6e gegen den Kassettenspeicher 3 geschwenkt, vgl. Figuren 4 und 6, liest die zu speichernden Daten aus diesem aus und gibt sie - wie beschrieben - an den Zentralspeicher 7. Dann wird die Leseeinrichtung 6e wieder weggeschwenkt. Die Kurbel 29 dreht nun die Welle 28 entgegen dem Uhrzeigersinn. Dabei werden die Kassette und die Riegel und Hebel durch die in den Figuren 5 und 6 gezeigten, aber nicht bezifferten Steuerkurven nach unten bewegt und zugleich Riegel 23, 24 und Hebel 25, 26 so gedreht und erstere auch verschoben, daß die Kassettenverriegelmittel 1a entriegelt werden und der Kassettendeckel entweder unter der Wirkung einer eigenen Feder aufspringt oder durch einen nicht sichtbaren, an der Kurbel 29 angelenkten Öffnungshaken hochgezogen wird. Mittels bekannter Sauger 32 wird nun die Folie der Kassette entnommen und in eine bekannte Filmbühne 33 (z.B. mit Vakuumhaltemitteln) eingeführt und dem Laserstrahlscanner 6a zu- bzw. an diesem vorbeigeführt. Nach dem Löschen der Folie wird sie in den Bereich der Sauger 32 der zweiten Positioniervorrichtung für die Kassette 1 transportiert und durch diese zurück in die Kassette gelegt. Die Kassette wurde ebenfalls bereits dorthin bewegt, nachdem sie in der ersten Positioniervorrichtung geschlossen und zurücktransportiert worden und von der ersten Führungskufe 20 auf die Ebene der Bahn 16 hochgehoben und durch die beiden etwa aneinander anschließenden Transportbänder 18 weiterbewegt worden war. Bei Erreichen der zweiten Positioniervorrichtung wurde sie wieder angehalten und durch die zweite Führungskufe 20 wieder in die Positioniervorrichtung eingegeben, positioniert und geöffnet. Nun, nach dem Beladen mit der Folie 2 verläuft der beschriebene Ablauf mittels der Kurbel 29 rückwärts, Kassette und Welle 28 werden nach aufwärts transportiert und die Hebel 25, 26 erfassen den Kassettendeckel und drücken ihn zu. Die wiederbeladene und geschlossene Kassette wird von der zweiten Führungskufe 20 hochgeschwenkt auf die Ebene der Bahn 16 und mittels des zweiten Transportbandes 18 und dessen Mitnehmer 18a sowie durch weitere Reibrollen 17 aus dem Ausgabeschlitz 6g wieder ausgegeben.

Die Bewegung der Bühne 33 kann dabei durch bekannte Mittel, wie ein motorisch angetriebenes Schneckengewinde 34 oder einen Riementrieb erfolgen. Das Herabschwenken der Leseeinrichtung 6e auf den Kassettenspeicher 3 in der ersten Positioniervorrichtung, vgl. Figur 6, wird ebenfalls motorisch bewirkt. Eine Führungskufe 20 ist deutlich sichtbar in Figur 5 gezeigt. Beide Führungskufen 20 werden ebenfalls in nicht gezeigter Weise motorisch bewegt. Jede Führungskufe 20 weist zwei Zinken 20a auf, die die untere Kassettenschmalseite etwas übergreifen und beim Herunterschwenken in die Positioniervorrichtung bis zur endgültigen Übergabe halten bzw. wieder aus ihr herausheben. Auch einige Antriebsmotoren 35 für die Positioniervorrichtungen sind schematisch angedeutet.

Die verfahrensgerechte Steuerung der Antriebe aller Einzelvorrichtungen der Lesestation 6 erfolgt dabei in an sich bekannter Weise über eine elektronische Steuervorrichtung 36, wie in Figur 4 angedeutet worden ist. Dabei kann zweckmäßigerweise diese Steuerung so ausgelegt werden, daß bei Eingabe einer falschen, nicht verarbeitbaren Kassette oder bei falscher Eingabe einer Kassette dies durch die Leseeinrichtung 6e für den Kassettenspeicher 3 erkannt und an die elektronische Steuervorrichtung 36 gemeldet wird. Bei Eingabe einer falschen Kassette oder falschen Eingabe einer verarbeitbaren Kassette liegt nämlich dann in der positionierten Stellung in der ersten Positioniervorrichtung kein Kassettenspeicher 3 unter der Leseeinrichtung 6e. Diese findet beim Abtasten also keine lesbaren Informationen vor und meldet dies nicht nur an den Zentralspeicher 7, sondern auch an die Steuervorrichtung 36. Letztere stoppt den normalen Verfahrensablauf und läßt statt dessen den Ausgabevorgang für die unbrauchbare Kassette einleiten. Die Kassette wird gar nicht geöffnet, sondern von der ersten Führungskufe 20 wieder auf die Ebene der Bahn 16 angehoben und durch Bewegung des Bandes 18 und der Reibrollen 17 aus dem Eingabeschlitz 6f ausgegeben. Somit weiß ein Benutzer sofort, daß irgend etwas mit dieser Kassette nicht in Ordnung war.

Eine weitere Möglichkeit bringen das erfindungsgemäße Verfahren und eine entsprechende Vorrichtung noch mit sich. Es kann in dem Kassettenspeicher 3 oder einem entsprechenden Speicher auf der Folie, der durch ein Kassettenfenster frei zugänglich ist, ein veränderbarer Datensatz enthalten sein, dessen Daten z.B. bei jedem Zusammenwirken mit der Leseeinrichtung 6e um "eins" erhöht werden und der nur bei einem Folienwechsel auf "Null" zurücksetzbar ist. Auf diese Weise läßt sich die Zahl der Benutzungen der Folie ermitteln. Hierbei läßt sich bei einer an die Lebensdauer einer Folie heranreichenden Zahl von Belichtungen ein Alarmsignal in einem der zum System gehörenden Geräte 4, 5 und/oder 6 auslösen.

Die erfindungsgemäße Lesestation 6 hat darüber hinaus noch den Vorteil, daß für die Positionierung und Entladung einer Kassette und für deren Positionierung und Wiederbeladung zwei gleiche Baugruppen verwendet werden können, wodurch sich die Fertigung und Montage vereinfachen.

**Patentansprüche**

1. Verfahren zur Handhabung einer aus zwei gegeneinander schwenkbaren Teilen, nämlich Deckelteil und Bodenteil, bestehenden Röntgenaufnahmekassette (1), in der eine mit einer stimulierbaren Phosphorschicht beschichtete Röntgenaufnahmefolie (2), mit ihrer Schichtseite zum Bodenteil gewendet, angeordnet ist, wobei ein bei der Belichtung der Folie mit Röntgenstrahlen entstandenes latentes Bild in einer Lesestation (6) nach dem Entnehmen der Folie aus der Kassette mittels eines Laserstrahlscanners (6a) zum Leuchten gebracht und das hierbei ausgesandte Licht in digitale elektrische Bildsignale umgewandelt und anschließend die Folie durch Beleuchtung durch eine Lampe (6d) mit geeignetem sichtbaren Licht gelöscht wird, die digitalen Bildsignale in einem Zentralspeicher (7) abgespeichert werden und an einem Bildschirm (8) in ein sichtbares Bild umgewandelt und/oder in einem Bildschirmaufnahmegerät oder in einem vom Zentralspeicher (7) gesteuerten Laserstrahlaufnahmegerät (9), beides Hardcopy-Geräte genannt, in ein sichtbares Bild umgewandelt und auf fotografischen Blattfilm aufgenommen werden und die Folie (2) wieder in dieselbe Kassette (1), der sie entnommen wurde, eingeführt wird, dadurch gekennzeichnet, daß die Kassette (1) in der Lesestation (6) in einer ersten Stellung positioniert und ihr die Folie (2) entnommen und einer in ihrer Anfangsstellung befindlichen Filmbühne (33) zugeführt wird, daß die Filmbühne (33) mit der Folie (2) geradlinig von der Anfangsstellung in eine Endstellung transportiert wird, wobei sie den Laserstrahlscanner (6a) und die Löschlampe (6d) passiert, und daß die Kassette (1) geradlinig und parallel zur Filmbühne (33) in eine der Endstellung der Filmbühne (33) zugeordnete zweite Stellung transportiert wird und in dieser zweiten Stellung die Folie (2) wieder in die Kassette (1) eingeführt wird und daraufhin die Kassette (1) geschlossen und gebrauchsfertig weitertransportiert und aus einer Ausgabeöffnung (6g) der Lesestation (6) ausgegeben wird.

2. Verfahren nach Anspruch 1 unter Verwendung einer Kassette, die auf ihrem Deckelteil an einer für Kassetten aller vorkommenden Formate einheitlichen Stelle einen Daten in digitaler Form speichernden, beschreib-, les- und löschbaren Speicher (3) aufweist, wobei in den Speicher in einer Identifikationsstation (4) aufnahmespezifische Daten, z.B. Patientendaten, eingebbar sind, dadurch gekennzeichnet, daß der Speicher (3) der Kassette (1) in der ersten Stellung der Kassette (1) von einer Leseeinrichtung (6e) gelesen wird, daß bei Vorhandensein eines Leseergebnisses die Kassette (1) geöffnet und die Folie (2) bearbeitet und beide anschließend wieder zusammengeführt werden und die Kassette (1) aus der Ausgabeöffnung (6g) ausgegeben wird und das Leseergebnis zusammen mit den digitalen Bildsignalen im Zentralspeicher (7) abgespeichert wird und daß bei Fehlen eines Leseergebnisses, z.B. wegen falsch eingegebener oder nicht verwendbarer Kassette, die Kassette (1) mit der Folie (2) ungeöffnet wieder an einer Eingabeöffnung (6f) der Lesestation (6) ausgegeben wird.

3. Lesestation für eine Röntgenaufnahmekassette mit einer phosphorbeschichteten Folie zur Durchführung des Verfahrens nach Anspruch 1 oder 2, mit Mitteln zum Löschen der phosphorbeschichteten Folie, mit Mitteln zum Aufbelichten des abgescannten Bildes auf fotografischem Blattfilm, mit einer Filmbühne (33) zum Transport der phosphorbeschichteten Folie und mit Kassettenhandhabungsvorrichtungen (21-32), dadurch gekennzeichnet, daß hinter einer Eingabeöffnung (6f) und vor einer in der gegenüberliegenden Gehäuseseite der Lesestation (6) vorgesehenen, mit der Eingabeöffnung (6f) fluchtenden Ausgabeöffnung (6g) für eine Kassette (1) je ein ebenes Führungsbahnstück (16) mit Kassettentransportmitteln, vorzugsweise Reibrollen (17), angeordnet ist und daß zwischen den Führungsbahnstücken (16) zwei mit diesen und miteinander fluchtende Führungskufen (20) vorgesehen sind, über denen je ein Kassettentransportschieber oder -band (18) verläuft, daß unter jeder der Führungskufen (20) eine der Kassettenhandhabungsvorrichtungen (21 bis 32) angeordnet ist, daß die Führungskufen (20) derart ab- und aufwärts bewegbar, vorzugsweise schwenkbar sind, daß durch sie eine Kassette (1) in die zugeordnete Kassettenhandhabungsvorrichtung (21 bis 32) ein- und aus ihr herausführbar ist und daß die Filmbühne (33) geradlinig und parallel zu den Kassettentransportmitteln verschiebbar ist zwischen einer Anfangs- und einer Endposition, die jeweils mit der in einer der Handhabungsvorrichtungen (21-32) positionierten und geöffneten Kassette (1) fluchtet.

4.   Lesestation nach Anspruch 3, dadurch gekennzeichnet, daß über jeder Führungskufe (20) eine Stützplatte (15) für den Kassettenboden angeordnet ist, an der der Kassettentransportschieber oder das Kassettentransportband (18) gelagert ist.

5.   Lesestation nach einem der Ansprüchen 3 oder 4, dadurch gekennzeichnet, daß jede Führungskufe (20) mindestens zwei Hebezinken (20a) aufweist, durch die eine Kassette (1) an eine der Handhabungsvorrichtungen (21 bis 32) abgebbar bzw. hintergreif- und anhebbar ist, und daß der Abstand der Hebezinken (20a) kleiner ist als die kleinste in dieser Richtung vorkommende Kassettenlänge.

6.   Lesestation nach einem der Ansprüche 3 bis 5, dadurch gekennzeichnet, daß die Filmbühne (33) unter den Handhabungsvorrichtungen (21 bis 32) angeordnet ist und daß durch Folientransportmittel, wie Sauger (32) oder Transportwalzenpaare, oder Transportbänder, in der Anfangs- bzw. Endposition die in der Kassette (1) bzw. in der Filmbühne (33) befindliche Folie (2) in die Filmbühne bzw. zurück in die Kassette (1) bewegbar ist.

7.   Lesestation nach einem der Ansprüche 3 bis 6, dadurch gekennzeichnet, daß eine elektronische Steuervorrichtung (36) vorgesehen ist, mit der Antriebe für die Kassettentransportmittel (17, 18), für die Führungskufen (20), für die Baugruppen der Handhabungsvorrichtungen (21 bis 32) und die Filmbühne (33) derart verbunden sind, daß sie in funktionsgerechter, zeitlicher Folge ein- und ausschaltbar sind.

8.   Lesestation nach Anspruch 7 für Kassetten, die einen digitalen Speicher aufweisen oder einen auf der Folie angeordneten Speicher freigeben, dadurch gekennzeichnet, daß in der der Eingabeöffnung (6f) benachbarten Handhabungsvorrichtung (21 bis 32) eine Leseeinrichtung (6e) für den Speicher (3) schwenkbar angeordnet, mit dem Zentralspeicher (7) verbunden, durch die Steuervorrichtung (36) steuerbar und bei Positionierung der Kassette (1) in der Handhabungsvorrichtung (21 bis 32) gegen den Speicher (3) bewegbar und nach dem Auslesen der Daten des Speichers (3) zurückschwenkbar ist.

9.   Lesestation nach einem der Ansprüche 3-8, dadurch gekennzeichnet, daß die jeweils zwei Handhabungsvorrichtungen (21 bis 33) zum Kassettenent- bzw. -beladen sowie die Führungskufen (20) und die zugehörigen Transportmittel (17, 18) durch untereinander gleiche Baugruppen gebildet werden.

**Claims**

1.   Process for handling an X-ray cassette (1), which comprises two parts, namely a lid part and a bottom part, capable of swivelling towards one another and in which an X-ray film (2) coated with a stimulable phosphorus layer is disposed with its coated side turned towards the bottom part, wherein a latent image produced upon exposure of the film to X-rays is in a reading station (6), after removal of the film from the cassette, made luminescent by means of a laser beam scanner (6a) and the light thereby emitted is converted into digital electric image signals and then the film is erased as a result of exposure by a lamp (6d) to suitable visible light, the digital image signals are saved in a central memory (7) and converted on a display screen (8) into a visual image and/or are converted in a video recorder or a laser beam recorder (9) controlled by the main memory (7), both referred to as hard copy appliances, into a visual image and recorded onto photographic sheet film and the film (2) is re-inserted into the same cassette (1) from which it was removed, characterized in that the cassette (1) is placed in the reading station (6) in a first position and the film (2) is removed from the cassette and fed to a film stage (33) lying in its initial position, that the film stage (33) with the film (2) is rectilinearly conveyed from the initial position into an end position and in so doing passes the laser beam scanner (6a) and the erasing lamp (6d), and that the cassette (1) is conveyed rectilinearly and parallel to the film stage (33) into a second position associated with the end position of the film stage (33) and in said second position the film (2) is re-inserted into the cassette (1), whereupon the cassette (1) is closed and further conveyed ready for use and dispensed from an output opening (6g) of the reading station (6).

2. Process according to claim 1 using a cassette, which has on its lid part, at a uniform position for cassettes of all existing formats, a writable, readable and erasable memory (3) which stores data in digital form and into which exposure-specific data, e.g. patient data, may be entered at an identification station (4), characterized in that in the first position of the cassette (1) the memory (3) of the cassette (1) is read by a reading device (6e), that in the event of a readout the cassette (1) is opened and the film (2) processed and both are then re-combined and the cassette (1) is dispensed from the output opening (6g) and the readout together with the digital image signals is saved in the main memory (7), and that in the absence of a readout, e.g. owing to a cassette having been wrongly inserted or being unusable, the cassette (1) with the film (2) is dispensed again, unopened, at an input opening (6f) of the reading station (6).

3. Reading station for an X-ray film cassette with a phosphorus-coated film for effecting the process according to claim 1 or 2, having means for erasing the phosphorus-coated film, having means for exposing the scanned image on photographic sheet film, having a film stage (33) for conveying the phosphorus-coated film and having cassette handling devices (21-32), characterized in that a plane guideway portion (16) having cassette transport means, preferably friction rollers (17), is disposed in each case for one cassette (1) behind one input opening (6f) and in front of one output opening (6g) provided, flush with the input opening (6f), in the opposite housing side of the reading station (6), and that provided between the guideway portions (16) are two guide runners (20), which are flush with said guideway portions and with one another and above each of which a cassette conveyor slide or belt (18) extends, that one of the cassette handling devices (21 to 32) is disposed under each of the guide runners (20), that the guide runners (20) are capable of moving, preferably swivelling, downward and upward in such a way that by means of said runners a cassette (1) may be conveyed into and out of the associated cassette handling device (21 to 32), and that the film stage (33) is displaceable rectilinearly and parallel to the cassette transport means between an initial and an end position, which is in each case flush with the cassette (1) positioned and opened in one of the cassette handling devices (21-32).

4. Reading station according to claim 3, characterized in that there is disposed above each guide runner (20) a support plate (15) for the cassette base, on which support plate the cassette conveyor slide or the cassette conveyor belt (18) is supported.

5. Reading station according to one of claims 3 or 4, characterized in that each guide runner (20) has at least two lifting prongs (20a), which may dispense a cassette (1) to one of the handling devices (21 to 32) or may engage behind and lift a cassette, and that the distance between the lifting prongs (20a) is smaller than the smallest cassette length occurring in said direction.

6. Reading station according to one of claims 3 to 5, characterized in that the film stage (33) is disposed under the handling devices (21 to 32), and that by means of film transport means, such as suction means (32) or conveying roller pairs or conveyor belts, in the initial or end position the film (2) situated in the cassette (1) or in the film stage (33) may be moved into the film stage or back into the cassette (1).

7. Reading station according to one of claims 3 to 6, characterized in that an electronic control device (36) is provided, to which drives for the cassette transport means (17, 18), for the guide runners (20), for the subassemblies of the handling devices (21 to 32) and the film stage (33) are connected in such a way that they may be switched on and off in a functionally appropriate time sequence.

8. Reading station according to claim 7 for cassettes, which have a digital memory or enable a memory disposed on the film, characterized in that a reading device (6e) for the memory (3) is pivotally disposed in the handling device (21 to 32) adjacent to the input opening (6f), is connected to the main memory (7), is controllable by the control device (36) and, during positioning of the cassette (1) in the handling device (21 to 32), may be moved towards the memory (3) and, after reading out the data of the memory (3), may be swivelled back.

9. Reading station according to one of claims 3-8, characterized in that the, in each case, two handling devices (21 to 32) for cassette unloading and loading as well as the guide runners (20) and the associated transport means (17, 18) are formed by subassemblies which are identical to one another.

## Revendications

1. Procédé pour la manipulation d'une cassette de radiographie (1) composée de deux parties pivotant l'une par rapport à l'autre (partie couvercle et partie fond), comportant une feuille d'enregistrement radiographique (2) avec une couche de phosphore pouvant être stimulée disposée de façon que la face porteuse de la couche soit tournée vers la partie fond, procédé dans lequel une image latente produite lors de l'exposition de la feuille aux rayons X est rendue luminescente dans un poste de lecture (6), après l'enlèvement de la feuille hors de la cassette, au moyen d'un scanner à rayon laser (6a), et la lumière ainsi émise étant transformée en signaux electriques numériques d'image, après quoi la feuille est effacée par exposition à une lampe (6d) émettant une lumière visible appropriée, les signaux numériques d'image étant emmagasinés dans une mémoire centrale (7) et pouvant être transformés en image visible sur un écran vidéo (8) et/ou transformés en image visible et enregistrés sur pellicule photographique dans un appareil enregistreur à écran ou dans un appareil enregistreur à rayon laser (9) commandé par la mémoire centrale (7), ces deux appareils étant dénommés appareils producteurs de recopie imprimée (hard copy), et dans lequel la feuille (2) est réintroduite dans la même cassette (1), d'où elle a été enlevée, caractérisé en ce que, dans le poste de lecture (6), la cassette (1) est positionnée dans une première position et la feuille (2) est enlevée de la cassette et amenée à un support de film (33) qui se trouve dans sa position initiale, que le support de film (33) portant la feuille (2) est transporté suivant un parcours rectiligne de la position initiale à une position finale, en passant devant le scanner à rayon laser (6a) et la lampe d'effacement (6d), et que la cassette (1) est transportée suivant un parcours rectiligne parallèle au support de film (33), dans une seconde position correspondant à la position finale du support de film (33), seconde position dans laquelle la feuille (2) est à nouveau introduite dans la cassette (1), après quoi la cassette (1) est fermée et transportée, prête à l'emploi, pour être éjectée du poste de lecture (6) par une ouverture d'éjection (6g).

2. Procédé selon la revendication 1, dans lequel on utilise une cassette présentant, sur sa partie couvercle, à un endroit uniforme pour tous les formats de cassette existants, une mémoire (3) permettant d'emmagasiner, de décrire, de lire et d'effacer des données sous forme numérique, avec la possibilité d'introduire dans la mémoire, dans un poste d'identification (4), des données spécifiques à l'enregistrement radiographique, par exemple des données relatives au patient, caractérisé en ce que la mémoire (3) de la cassette (1) est lue par un dispositif de lecture (6e) dans une première position de la cassette (1), que, en réponse à un résultat de lecture existant, la cassette (1) est ouverte et la feuille (2) est traitée, après quoi les deux sont à nouveau réunies et la cassette (1) est éjectée par l'ouverture d'éjection (6g) et le résultat de la lecture est mémorisé ensemble avec les signaux numériques d'image dans la mémoire centrale (7), et en ce que, en l'absence d'un résultat de lecture, par exemple en raison d'une cassette mal introduite ou inutilisable, la cassette (1) est expulsée, non ouverte, avec la feuille (2), par une ouverture d'introduction (6f) du poste de lecture (6).

3. Poste de lecture pour une cassette d'enregistrement radiographique avec une feuille revêtue d'une couche de phosphore pour l'exécution du procédé selon la revendication 1 ou 2, comportant des moyens pour effacer la feuille revêtue de phosphore, des moyens pour appliquer l'image scannée sur une pellicule photographique, un support de film (33) pour le transport de la feuille revêtue de phosphore, et des dispositifs de manipulation de cassette (21 - 32), caractérisé en ce que, derrière une ouverture d'introduction (6f) et devant une ouverture d'éjection (6g) pour cassette, prévue dans le côté de boîtier opposé et s'alignant avec l'ouverture d'introduction (6f), est chaque fois disposé un tronçon plan de voie de guidage (16) avec des moyens de transport de cassette, de préférence des galets de friction (17), et que, entre les tronçons de voie de guidage (16), sont prévus deux guides (20), s'alignant avec ces tronçons et l'un par rapport à l'autre, et sur lesquels s'étend chaque fois un moyen de transport ou une bande de transport (18), en ce qu'un des dispositifs de manipulation de cassette (21 à 32) est disposé sous chacun des guides (20), que les guides (20) sont mobiles, de préférence pivotables, vers le bas et vers le haut de manière telle qu'ils permettent l'introduction et la sortie d'une cassette (1) au dispositif de manipulation de cassette (21 à 32) qui lui correspond, et en ce que le support de film (33) peut être déplacé, suivant un parcours rectiligne et parallèle aux moyens de transport de cassette, entre une position initiale et une position finale, s'alignant chaque fois avec la cassette (1) positionnée et ouverte dans l'un des dispositifs de manipulation (21 - 32).

4. Poste de lecture selon la revendication 3, caractérisé en ce qu'il est prévu au-dessus de chaque guide (20), une plaque d'appui (15) pour le fond de cassette, sur laquelle est monté le moyen ou la bande de transport (18) de la cassette.

5. Poste de lecture selon l'une des revendications 3 ou 4, caractérisé en ce que chaque guide (20) présente au moins deux dents de levage (20a), par lesquelles une cassette (1) peut être transmise à l'un des dispositifs de manipulation (21 à 32), ou saisie et levée, et que la distance entre les dents de levage (20a) est inférieure à la plus petite longueur de cassette se présentant dans cette direction.

6. Poste de lecture selon l'une des revendications 3 à 5, caractérisé en ce que le support de film (33) est prévu sous les dispositifs de manipulation (21 à 32) et que, dans la position initiale ou dans la position finale, la feuille (2) se trouvant dans la cassette (1) ou dans le support de film (2) peut, par des moyens de transport tels que des ventouses (32) ou des paires de rouleaux transporteurs ou des bandes transporteuses, être ramenée dans le support de film ou dans la cassette (1).

7. Poste de lecture selon l'une des revendications 3 à 6, caractérisé en ce qu'il est prévu un dispositif de commande électronique (36), avec lequel des entraînements pour les moyens de transport de cassette (17, 18), pour les guides (20), pour les modules des dispositifs de manipulation (21 à 32) et le support de film (33) sont reliés de manière telle qu'ils peuvent être enclenchés et déclenchés dans un ordre chronologique et fonctionnel.

8. Poste de lecture selon la revendication 7 pour cassettes présentant une mémoire numérique ou libérant une mémoire placée sur la feuille, caractérisé en ce que, dans le dispositif de manipulation (21 à 32) voisin de l'ouverture d'introduction (6f), est monté de manière pivotante un dispositif de lecture (6e) pour la mémoire (3), relié avec la mémoire centrale (7), pouvant être commandé par le dispositif de commande (36) et pouvant être déplacé par rapport à la mémoire (3) lors du positionnement de la cassette (1) dans le dispositif de manipulation (21 à 32), et ramené dans sa position après la lecture des données de la mémoire (3).

9. Poste de lecture selon l'une des revendications 3 à 8, caractérisé en ce que chaque fois deux dispositifs de manipulation (21 à 33) pour le déchargement ou le chargement de cassettes ainsi que les guides (20) et les moyens de transport (17, 18) y associés sont formés par des modules identiques entre eux.

Fig. 1

Röntgenaufnahmegerät

Fig. 2

Fig. 4

Fig. 3

Fig. 5

Fig. 6